# EUROPEAN PATENT APPLICATION

(11) **EP 2 354 467 A2**
(43) Date of publication of application: **10.08.2011**
(21) Application number: 10196291.8
(22) Date of filing: 21.12.2010
(51) Int. Cl.: F01D 17/10, F01D 17/14, F01D 25/00, F01D 25/32, F16K 47/08

(54) **Flow guided steam strainer for steam turbine valves**

(30) Priority: 04.01.2010 US 651643
(71) Applicant: General Electric Company, Schenectady, NY 12345 (US)
(72) Inventor: Chowhdury, Abhishek, 560066 Karnataka (IN); Done, Vamshidhar, 560066 Karnataka (IN); Shah, Vishal, 560066 Karnataka (IN)
(74) Representative: Gray, Thomas

(57) **Abstract**

A steam turbine valve (10) includes a casing (22) and an inlet (12) in the casing (22) through which a flow of steam flows into the valve (10). The valve (10) also includes a strainer (20) located in the casing (22), and a flow guide (38) connected with the strainer (20) to protrude out from the strainer (20) at a location in which the flow of steam strikes the flow guide (38), changes direction in its flow with respect to the strainer (20), and passes through a flow path of the strainer (20) to an inside portion (26) of the strainer (20).

## Description

The subject matter disclosed herein relates to steam turbines and, in particular, to a flow guided steam strainer for a steam turbine valve.

In the operation of a steam turbine, oftentimes foreign objects in the form of solid particles of different sizes (e.g., oxide scale, metal scraps, objects left behind in the steam turbine piping) may enter the main steam path flowing from, for example, a boiler. A strainer is typically used to filter or block out the unwanted and potentially harmful particle impurities from the main steam flow. The strainer, which is typically cylindrical in shape, is commonly located within the casing of a valve located in the steam turbine, for example a combined main stop and control valve or a reheat valve. The strainer is positioned within the valve casing such that the steam entering the valve at an inlet directly strikes a solid surface on a portion of the outer circumferential surface of the strainer. The solid surface portion of the strainer tends to stop or slow down the main steam flow. The steam then changes direction to circumferentially flow by the perforated or screen-like portion of the remainder of the outer circumferential surface of the strainer in an annular passage between the valve casing and the outer surface of the strainer.

Typically, the solid surface portion of the strainer is better suited than the perforated portion of the strainer to stop foreign objects as they enter the valve without damaging or breaking the strainer material and possibly entering the valve where they could cause further damage. The steam flowing in the annular passage passes through the perforations or holes in the strainer where the steam enters the inside of the strainer and continues its flow downstream through the valve. The perforations or holes in the circumferential portion of the strainer other than at the location of the solid surface are typically sized to ensure that unwanted particles are screened out or otherwise prevented from entering the strainer with the main steam flow,

It is known that the steam striking the solid portion of the strainer causes an undesirable pressure drop of the flow of steam across the strainer along with attendant vibrations and noise. In other words, the aerodynamic flow path of the steam with respect to the strainer is far less than ideal, thereby possibly causing the aforementioned problems.

According to one aspect of the invention, a steam turbine valve includes a casing and an inlet in the casing through which a flow of steam flows into the valve. The valve also includes a strainer located in the casing, and a flow guide connected with the strainer to protrude out from the strainer at a location in which the flow of steam strikes the flow guide, changes direction in its flow with respect to the strainer and passes through a flow path of the strainer to an inside portion of the strainer.

According to another aspect of the invention, a valve for a steam turbine includes an inlet through which a flow of steam flows into the valve, and a strainer located within the valve, wherein at least a portion of the strainer includes a plurality of holes through which the steam flows. The valve also includes a flow guide connected with the strainer to protrude out from the strainer at a location in which the flow of steam strikes the flow guide and changes direction in its flow with respect to the strainer and passes through the holes in the first portion of the strainer to an inside portion of the strainer.

According to yet another aspect of the invention, a valve includes an inlet through which a flow of steam flows into the valve, and a cylindrical strainer located within the valve, wherein at least a first portion of the strainer includes a plurality of holes through which the steam flows. The valve also includes a flow guide connected with the strainer to protrude out from the strainer at a location in which the flow of steam strikes the flow guide and changes direction in its flow with respect to the strainer and passes through the holes in the first portion of the strainer to an inside portion of the strainer.

The subject matter, which is regarded as the invention, is particularly pointed out and distinctly claimed in the claims at the conclusion of the specification.

The foregoing and other features and advantages of the invention are apparent from the following detailed description taken in conjunction with the accompanying drawings in which:

FIG. 1 is a perspective view, partially transparent, of a steam valve having embodiments of the invention located therein; and

FIG. 2 is a more detailed perspective view, partially transparent, of a portion of the steam valve of FIG. 1 with a strainer according to an embodiment of the invention.

The detailed description explains embodiments of the invention, together with advantages and features, by way of example with reference to the drawings.

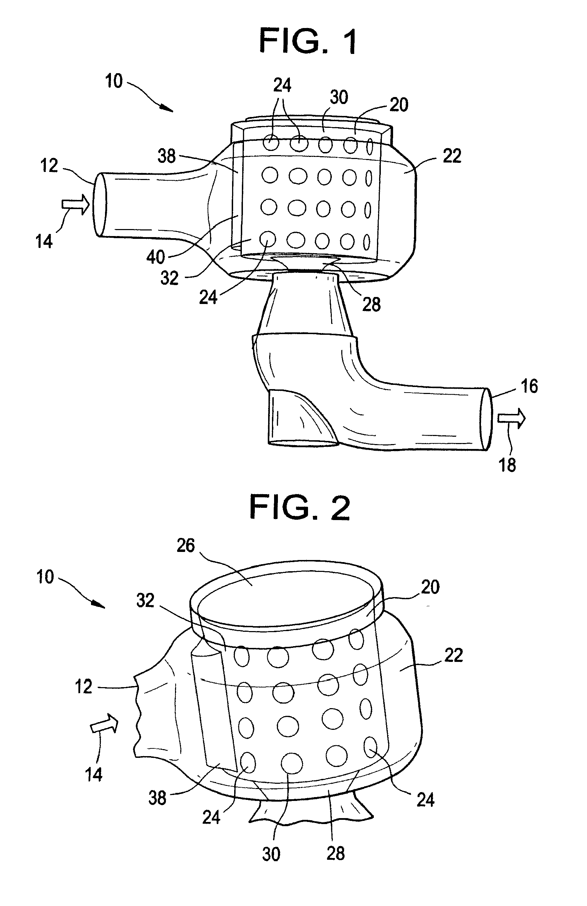

In FIG. 1 is a steam valve 10 that is part of a steam turbine. For example, the steam valve 10 may be a combined main stop and control valve, a reheat valve or other type of steam turbine valve with various components therein (most not shown) to control and/or direct the flow of steam entering the valve 10 at an inlet 12 as indicated by the arrowhead 14, then passing through the valve and out of an outlet 16 of the valve 10 as indicated by an arrowhead 18 and on to further components of the steam turbine.

Shown in FIG. 1 is a strainer 20 located within a valve casing 22. The strainer 20 may comprise one or more layers of material having a plurality of perforations or holes 24 in each layer, where the holes 24 may be the same size or of different size. Typically the number of layers of material in which the holes 24 are formed is selected in an attempt to reduce the amount of pressure drop of the steam across the strainer 20. The holes 24 are typically sized to prevent the anticipated unwanted particulate material (e.g., oxide scale, metal scraps, objects left behind in the steam turbine piping) from entering into the strainer with the rest of the main steam flow.

As seen in FIGs. 1 and 2, the strainer 20 may be cylindrical in shape, although other shapes for the strainer 20 are contemplated by embodiments of the invention. The strainer 20 may have a hollow central portion 26 formed therein through which the main steam flow passes in a generally downward direction as seen in FIGs. 1 and 2 before exiting the strainer 20 at the bottom 28 of the strainer 20 and then continuing on to other parts of the steam valve 10.

FIGs. 1-2 show that the holes 24 are formed in the strainer 20 around a portion 30 of the circumferential outer periphery material of the strainer 20. The holes 24 are formed through the entire thickness of the outer periphery material of the strainer 20. The remaining portion 32 of the circumferential outer periphery material of the strainer 20 is a solid portion; that is, a portion 32 without any holes 24 formed therein. The angular amount of this solid portion 32 varies as needed for the application space. The solid portion 32 of the strainer 20 is disposed to face the main steam flow entering the steam valve 10 at the valve inlet 12. In prior art strainer designs discussed hereinabove, the main steam flow strikes the solid portion 32 of the strainer 20, which stops or slows down the main steam flow. The main steam flow then is diverted to flow in an annular passage that is located between the outside of the strainer 20 and the inside of the casing 22. As it travels through the annular passage, the main steam flow passes through the holes 24 and into the central hollow portion 26 of the strainer 20 where it flows downward through the strainer and exits the strainer 20 at the bottom 28.

In accordance with embodiments of the invention, the solid portion 32 of the circumferential outer periphery material of the strainer 20 has a flow guide 38 formed integral therewith or attached or connected thereto by, e.g., welding or riveting. The flow guide 38 may form an inverted V-shape structure that protrudes out from the solid portion of the circumferential outer periphery material of the strainer 20. The flow guide has an apex, along with its two outer surfaces 40, are directed to point into the main steam flow entering the steam valve 10 at the valve inlet 12. However, embodiments of the invention contemplate other shapes for the flow guide 38 besides the inverted V-shape (i.e., a triangular shape). The two outer surfaces 40 of the flow guide may be straight as shown, or may be curved in a convex or concave manner as desired to effectuate the proper aerodynamic flow of the main steam flow. As shown in FIGs. 1 and 2, the flow guide 38 may span the entirety or a portion of the vertical distance of the solid portion 32 of the strainer 20.

In operation, as the main steam flow enters the steam valve 10 at the inlet 12 and travels towards the strainer 20, the steam flow strikes the flow guide 38. The flow guide 38 diverts the main steam flow into the annular passage in a relatively smoother aerodynamic manner than in the prior art discussed herein above where the main steam flow struck the solid portion 32 of the strainer 20, thereby causing an undesirable pressure drop of the flow of steam across the strainer 20 along with attendant vibrations and noise. In embodiments of the invention, in contrast the relatively smoother aerodynamic flow of the main steam around the strainer 20 causes less pressure drop across the strainer 20. It also causes a lesser amount of vibrations as well as noise. The smoother aerodynamic flow path provided by the flow guide 38 reduces or eliminates steam recirculation zones in the vicinity of the strainer 20, while also reducing or eliminating viscous energy losses and pressure fluctuations.

Embodiments of the invention provide for a relatively smoother flow of the input steam with respect to the strainer 20 within a steam valve 10, thereby resulting in a reduced amount of pressure drop across the strainer 20, and thus, the valve itself. The reduced pressure drop provides increased steam turbine efficiency. Embodiments of the invention also provide for reduced amounts of vibration and noise in the vicinity of the strainer.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A steam turbine valve (10), comprising:
a casing (22);
an inlet (12) in the casing (22) through which a flow (14) of steam flows into the valve (10);
a strainer (20) located in the casing (22); and
a flow guide (38) connected with the strainer (20) to protrude out from the strainer (20) at a location in which the flow (14) of steam strikes the flow guide (38), changes direction in its flow with respect to the strainer (20) and passes through a flow path of the strainer (20) to an inside portion (26) of the strainer (20).

2. The steam turbine valve (10) of claim 1, wherein the strainer (20) is cylindrical in shape.

3. The steam turbine valve (10) of claim 1 or claim 2, an annular passage being located between an outside of the strainer (20) and an inside of the casing (22), wherein when the flow (14) of steam strikes the flow guide (38) the flow of steam changes direction and flows in the annular passage.

4. The steam turbine valve (10) of any preceding claim, wherein the strainer (20) has a plurality of holes (24) formed therein through which the flow (14) of steam passes to an inside portion (26) of the strainer (20).

5. The steam turbine valve (10) of any preceding claim, wherein the strainer (20) has a first portion (30) that includes a plurality of holes (24) formed therein through which the flow (14) of steam passes to an inside portion (26) of the strainer (20), the strainer (20) has a second portion (32) that comprises a solid unapertured portion, the flow guide (38) being connected with the solid portion (32) of the strainer (20).

6. The steam turbine valve (10) of any preceding claim, wherein the flow guide (38) comprises an inverted V-shape guide having an apex and a pair of facing surfaces (40) at which the flow (14) of steam strikes.

7. The steam turbine valve (10) of claim 6, wherein the pair of facing surfaces (40) are one of straight, convex, or concave in shape.

8. A valve (10), comprising:
an inlet (12) through which a flow of steam flows into the valve;
a cylindrical strainer (20) located within the valve, wherein at least a first portion (30) of the strainer includes a plurality of holes (24) through which the steam flows; and
a flow guide (38) connected with the strainer (20) to protrude out from the strainer at a location in which the flow of steam strikes the flow guide and changes direction in its flow with respect to the strainer and passes through the holes (24) in the first portion (30, 32) of the strainer to an inside portion of the strainer.

9. The valve of claim 8, wherein the flow guide (38) is connected with a unapertured second portion (32) of the strainer.

10. The valve of claim 8 or claim 9, wherein an annular passage is located outside of an outer surface of the strainer (20), wherein when the flow of steam strikes the flow guide (38) the flow of steam changes direction and flows in the annular passage.

11. The valve of any one of claims 8-10, wherein the flow guide (38) comprises an inverted V-shape, triangular guide having an apex and a pair of facing surfaces (40) at which the flow of steam strikes and changes direction to flow in an annular passage that at least partially surrounds the strainer (20).

12. The valve of claim 11, wherein the pair of facing surfaces (40) are one of straight, convex, or concave in shape.
